# EUROPEAN PATENT APPLICATION

(11) **EP 2 628 639 A1**
(43) Date of publication of application: **21.08.2013**
(21) Application number: 10858345.1
(22) Date of filing: 13.10.2010
(51) Int. Cl.: B60Q 1/44

(54) **BRAKE DEVICE FOR VEHICLE AND CONTROL DEVICE**

(71) Applicant: TOYOTA JIDOSHA KABUSHIKI KAISHA, Toyota-shi, Aichi-ken, 471-8571 (JP)
(72) Inventor: MATSUBAYASHI, Hiroyuki, TOYOTA-SHI, AICHI 471-8571 (JP); KATO, Hidehisa, TOYOTA-SHI, AICHI 471-8571 (JP); WATANABE, Yoshinori, TOYOTA-SHI, AICHI 471-8571 (JP)
(74) Representative: Intès, Didier Gérard André
(86) International application number: PCT/JP2010/067977
(87) International publication number: WO 2012/049747

(57) **Abstract**

Provided is a vehicle braking device for applying a braking force on tires arranged on a vehicle body rotatably, the vehicle braking device including a fluid pressure braking unit configured to act the braking force on the tires; a master cylinder configured to supply fluid pressure to the fluid pressure braking unit; a pressure detection sensor configured to detect pressure of the fluid pressure supplied from the master cylinder to the fluid pressure braking unit; and a control device that includes a storage unit configured to store detected driving conditions, a braking operation determining unit configured to determine state of the braking operation based on the fluid pressure detected by the pressure detection sensor, and a control unit configured to control operation based on the determination result of the braking operation determining unit, wherein the braking operation determining unit determines that the braking operation is input when the fluid pressure detected by the pressure detection sensor is greater than or equal to a threshold value set in advance, and the control unit switches a brake lamp from a non-lighted state to a lighted state as a control corresponding to the input of the braking operation, when the braking operation determining unit determines that the braking operation is input if the braking operation determining unit determines that the braking operation is input.

## Description

### Field

The present invention relates to a vehicle braking device for applying braking force on a vehicle to decelerate and stop the vehicle, and a control device of the vehicle.

### Background

A vehicle such as an automobile includes a braking device such as a brake or the like to decelerate and stop the vehicle during travelling. The braking device decelerates and stops the vehicle by applying load to a rotating tire, an axle, and a drive mechanism in a direction of suppressing the rotation.

The vehicle braking device is operated when a brake pedal is depressed. The vehicle detects a depressing amount and the depressing acceleration of the brake pedal, and controls the lighting of the brake lamp based on the detected amount, as described in patent Literature 1. In the device described in patent Literature 1, the lighting state of the brake lamp is controlled based on the depressing acceleration.

Patent Literature 2 describes a device for blinking the brake lamp ON and OFF, and increasing/decreasing the luminosity when a brake hydraulic pressure reaches a constant pressure and a pressure switch is operated to notify the sudden braking as fast as possible. Patent Literature 3 describes a device for lighting the stop lamp when a deceleration caused by the braking force of a braking means becomes greater than or equal to a predetermined value.

### Citation List

### Patent Literature

Patent Literature 1: Japanese Patent Application Laid-open No. 2006-248294
Patent Literature 2: Japanese Patent Application Laid-open No. H07-195977
Patent Literature 3: Japanese Patent Application Laid-open No. H07-065298

### Summary

### Technical Problem

In a device that detects a brake input operation (i.e., braking operation) by the depressing amount (stroke amount) of the brake pedal, as described in patent Literature 1, a sensor for detecting the depressing amount of the brake pedal needs to be arranged. Thus, a detector for detecting the braking operation is to be installed. When a sensor for detecting the depressing amount of the brake pedal breaks down, the control based on the braking operation cannot be executed.

Patent Literature 2 and patent Literature 3, on the other hand, can control the lighting of the brake lamp based on the detected value other than the depressing amount of the brake pedal. However, patent Literature 2 and patent Literature 3 describe methods for lighting the brake lamp at the time of emergency, and the like, which are executed with the lighting control of the brake lamp based on the depressing amount of the brake pedal. The devices described in patent Literature 2 and patent Literature 3, therefore, can light the brake lamp at the time of emergency based on the detected value other than the depressing amount of the brake pedal, but does not carry out the control on the brake operation other than at the time of emergency.

Since the depressing amount of the brake pedal, the brake hydraulic pressure and the deceleration have difference in behavior, similar control is difficult to execute even if the brake hydraulic pressure and the deceleration are used in place of the depressing amount of the brake pedal.

In light of the foregoing, it is an object of the present invention to provide a vehicle braking device and a control device capable of accurately detecting the braking operation with a simple device configuration.

### Solution to Problem

In order to solve the above mentioned problem and achieve the object, in a vehicle braking device according to the present invention for applying a braking force on tires arranged on a vehicle body rotatably, the vehicle braking device includes a fluid pressure braking unit configured to act the braking force on the tire; a master cylinder configured to supply fluid pressure to the fluid pressure braking unit; a pressure detection sensor configured to detect pressure of the fluid pressure supplied from the master cylinder to the fluid pressure braking unit; and a control device including a storage unit configured to store detected driving conditions, a braking operation determining unit configured to determine state of the braking operation based on the fluid pressure detected by the pressure detection sensor, and a control unit configured to control operation based on the determination result of the braking operation determining unit, wherein the braking operation determining unit determines that the braking operation is input when the fluid pressure detected by the pressure detection sensor is greater than or equal to a threshold value set in advance, and the control unit switches a brake lamp arranged on the vehicle body from a non-lighted state to a lighted state as a control corresponding to the input of the braking operation, when the braking operation determining unit determines that the braking operation is input.

Further, it is preferable that the control unit stores a drive state of set time before a time point at which determination is made that the fluid pressure detected by the pressure detection sensor is greater than or equal to the threshold value, in the storage unit as a drive state at start of the input of the braking operation, as a control corresponding to the input of the braking operation, when the braking operation determining unit determines that the braking operation is input.

Further, it is preferable that the control unit sets the set time based on a changing speed of the fluid pressure.

Further, it is preferable that the control unit makes the set time shorter the greater the changing speed of the fluid pressure, and makes the set time longer the smaller the changing speed of the fluid pressure.

Further, it is preferable that the braking operation determining unit determines that the braking operation is terminated when the fluid pressure detected by the pressure detection sensor is smaller than a termination threshold value set in advance, in a state where the determination being made that the braking operation is input, and the control unit preferably terminates the control corresponding to the input of the braking operation, when the braking operation determining unit determines that the braking operation is terminated.

In order to solve the above mentioned problem and achieve the object, in a vehicle braking device according to the present invention for applying a braking force on tires arranged on a vehicle body rotatably, the vehicle braking device includes a fluid pressure braking unit configured to act the braking force on the tire; a master cylinder configured to supply fluid pressure to the fluid pressure braking unit; a pressure detection sensor configured to detect pressure of the fluid pressure supplied from the master cylinder to the fluid pressure braking unit; and a control device including a storage unit configured to store detected driving conditions, a braking operation determining unit configured to determine state of the braking operation based on the fluid pressure detected by the pressure detection sensor, and a control unit configured to control operation based on the determination result of the braking operation determining unit, wherein the braking operation determining unit determines that the braking operation is terminated when determining that the fluid pressure detected by the pressure detection sensor is smaller than a termination threshold value set in advance, in a state where the determination being made that the braking operation is input, and the control unit terminates the control corresponding to the input of the braking operation when the braking operation determining unit determines that the braking operation is terminated.

Here, it is preferable that the braking operation determining unit sets the termination threshold value based on the changing speed of the fluid pressure.

Further, it is preferable that the braking operation determining unit sets the termination threshold value higher the greater the changing speed of the fluid pressure, and sets the termination threshold value lower the smaller the changing speed of the fluid pressure.

Further, it is preferable that the control unit switches the brake lamp from a lighted state to a non-lighted state as a control for terminating the braking control.

In order to solve the above mentioned problem and achieve the object, in a control device of a vehicle according to the present invention, including a fluid pressure braking unit configured to act a braking force on the tires, a master cylinder configured to supply fluid pressure to the fluid pressure braking unit, and a pressure detection sensor configured to detect the pressure of the fluid pressure supplied from the master cylinder to the fluid pressure braking unit, the control device applying a braking force on the tires arranged on the vehicle body rotatably, the control device includes a storage unit configured to store driving condition detected by a sensor arranged on the vehicle body; a braking operation determining unit configured to determine a state of the braking operation based on the fluid pressure detected by the pressure detection sensor; and a control unit configured to control operation based on the determination result of the braking operation determining unit, wherein the braking operation determining unit determines that the braking operation is input when determining that the fluid pressure detected by the pressure detection sensor exceeds a threshold value set in advance, and the control unit switches a brake lamp arranged on the vehicle body from a non-lighted state to a lighted state as a control corresponding to the input of the braking operation, when the braking operation determining unit determines that the braking operation is input.

Further, it is preferable that the control unit assumes a drive state of set time before from a time point at which determination is made that the fluid pressure detected by the pressure detection sensor exceeds a threshold value set in advance as a drive state at start of input of the braking operation, as a control corresponding to the input of the braking operation, when the braking operation determining unit determines that the braking operation is input.

In order to solve the above mentioned problem and achieve the object, in a control device of a vehicle according to the present invention, including a fluid pressure braking unit configured to act a braking force on the tires, a master cylinder configured to supply fluid pressure to the fluid pressure braking unit, and a pressure detection sensor configured to detect the pressure of the fluid pressure supplied from the master cylinder to the fluid pressure braking unit, the control device applying a braking force on the tires arranged on the vehicle body rotatably, the control device includes a storage unit configured to store driving condition detected by a sensor arranged on the vehicle body; a braking operation determining unit configured to determine a state of the braking operation based on the fluid pressure detected by the pressure detection sensor; and a control unit configured to control operation based on the determination result of the braking operation determining unit, wherein the braking operation determining unit determines that the braking operation is terminated when determining that the fluid pressure detected by the pressure detection sensor is smaller than a termination threshold value set in advance, in a state where the determination being made that the brake operation is input, and the control unit terminates the control corresponding to the input of the braking operation when the braking operation determining unit determines that the braking operation is terminated. Advantageous Effects of Invention

The vehicle braking device and the control device according to the present invention have an effect of being able to accurately detect the braking operation with a simple device configuration.

### Brief Description of Drawings

FIG. 1 is a schematic view illustrating a schematic configuration of a vehicle including a vehicle braking device.
FIG. 2 is a block diagram illustrating a schematic configuration of a control device.
FIG. 3 is a flowchart illustrating one example of an operation of the control device.
FIG. 4 is a graph illustrating one example of a relationship with a stop switch signal of the hydraulic pressure.
FIG. 5 is a flowchart illustrating one example of an operation of a control device.
FIG. 6 is a graph illustrating one example of a relationship with a stop switch signal of the hydraulic pressure.
FIG. 7 is a flowchart illustrating one example of an operation of a control device.
FIG. 8 is a graph illustrating one example of a relationship with a stop switch signal of the hydraulic pressure.

### Description of Embodiments

The present invention will be hereinafter described in detail with reference to the drawings. It should be recognized that the present invention is not to be limited by the aspects (embodiments) for implementing the present invention described below. The configuring elements in the embodiment include elements that are easily contrived by those skilled in the art, elements that are substantially the same, and elements within the so-called equivalent scope. Furthermore, the configuring elements disclosed in the embodiment described below can be appropriately combined. The embodiment of the vehicle according to the present invention will be hereinafter described in detail based on the drawings. It should be recognized that the present invention is not limited by such embodiment.

### [Embodiment]

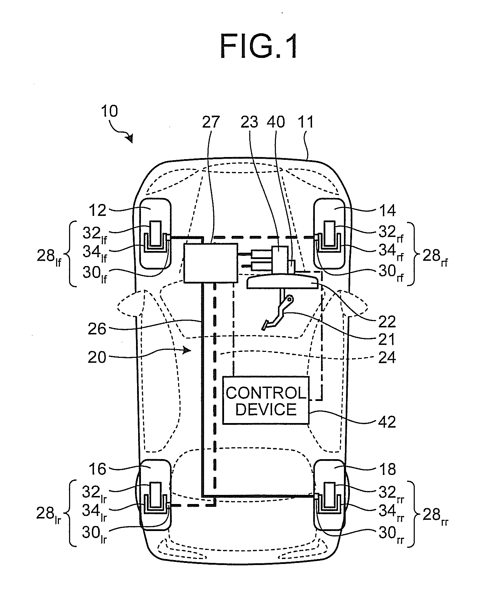

FIG. 1 is a schematic view illustrating a schematic configuration of a vehicle including a braking device. As illustrated in FIG. 1, a vehicle 10 includes a vehicle body 11, a left front tire 12, a right front tire 14, a left rear tire 16, a right rear tire 18, a braking device 20, a hydraulic pressure sensor 40, and a control device 42. Although not illustrated, the vehicle 10 also includes a various configurations necessary for the vehicle such as a drive source, a power transmission unit, an operation unit, a seat, and the like other than the above configuration.

The vehicle body 11 is a housing or a so-called body of the vehicle 10. The drive source, the power transmission unit, the operation unit, the seat, and the like are arranged inside the vehicle body 11.

The left front tire 12, the right front tire 14, the left rear tire 16, and the right rear tire 18 are arranged on four sides of the vehicle body 11 and are brought into contact with the road surface. The left front tire 12, the right front tire 14, the left rear tire 16, and the right rear tire 18 are rotated by the drive source and the power transmission unit thus transmitting the driving force to the road surface and causing the vehicle body 11 to move with respect to the road surface.

The braking device 20 includes a brake pedal 21 operated by a driver, a brake doubling device (brake booster) 22 for doubling a pedal depressing force input to the brake pedal 21, a master cylinder 23 for converting the pedal depressing force doubled by the brake doubling device 22 to a fluid pressure (hydraulic pressure) of the brake fluid, a first hydraulic piping 24 and a second hydraulic piping 26 for flowing the hydraulic pressure supplied from the master cylinder 23, a brake actuator 27 arranged on a piping path of the first hydraulic piping 24 and the second hydraulic piping 26, and hydraulic brake units 28_{lf}, 28_{rf}, 28₁ᵣ, 28ᵣᵣ arranged in accordance with each tire to generate the braking force from the hydraulic pressure supplied from the first hydraulic piping 24 and the second hydraulic piping 26. The first hydraulic piping 24 is connected to the hydraulic brake unit 28_{rf} and the hydraulic brake unit 28ₗᵣ. The second hydraulic piping 26 is connected to the hydraulic brake unit 28_{lf} and the hydraulic brake unit28ᵣᵣ. The braking device 20 has a partial function of the hydraulic pressure sensor 40 and a partial function of the control device 42.

The brake pedal 21 is an operation input mechanism operated by the driver, and moves in a depressing direction when depressed by the driver. The brake doubling device 22 is coupled to the brake pedal 21, so that when the brake pedal 21 is depressed and moved, the brake doubling device 22 doubles the pedal depressing force input to the brake pedal 21 and transmits the same to the master cylinder 23. When the force is transmitted from the brake doubling device 22, the master cylinder 23 supplies the fluid pressure corresponding to the transmitted force to the first hydraulic piping 24 and the second hydraulic piping 26. The master cylinder 23 includes a link mechanism for transmitting the force transmitted from the brake doubling device 22, a first cylinder for supplying the hydraulic pressure to the first hydraulic piping 24 according to the force transmitted from the link mechanism, and a second cylinder for supplying the hydraulic pressure to the second hydraulic piping 26 according to the force transmitted from the link mechanism. The inside of the first cylinder and the second cylinder are filled with working oil, and the first cylinder and the second cylinder supplies the hydraulic pressure to the respective hydraulic piping when the force is transmitted from the link mechanism and the hydraulic pressure inside is increased. The master cylinder 23 restores the hydraulic pressure to a reference hydraulic pressure and pushes the position of the brake pedal 21 back to a reference position when a state in which the pedal depressing force is not applied on the brake pedal 21 is achieved.

When a passenger depresses the brake pedal 21, the operation force (depressing force) is transmitted to the brake doubling device 22. The force in which the operation force is doubled is thus transmitted to the master cylinder 23. When the force in which the operation force is doubled is transmitted from the brake doubling device 22, the master cylinder 23 transmits the force to the first cylinder and the second cylinder by the link mechanism. The link mechanism transmits the force to the first cylinder and the second cylinder in series or in parallel. The force is thus transmitted to the first cylinder and the second cylinder simultaneously. When the force in which the operation force is doubled is transmitted, the volume inside the first cylinder and the second cylinder becomes small and a state in which the hydraulic pressure inside the cylinder is high is obtained. The hydraulic pressure of the working oil thus becomes high in the first cylinder, and the first cylinder discharges the working oil to the first hydraulic piping 24 at a constant hydraulic pressure. The hydraulic pressure of the working oil also becomes high in the second cylinder, and the second cylinder discharges the working oil to the second hydraulic piping 26 at a constant hydraulic pressure.

The brake actuator 27 is arranged on the piping path of the first hydraulic piping 24 and the second hydraulic piping 26 to adjust the hydraulic pressure supplied from the master cylinder 23 to the hydraulic brake units 28_{lf}, 28_{rf}, 28ₗᵣ, 28ᵣᵣ. Specifically, the brake actuator 27 is a brake fluid pressure adjusting means, and adjusts the master cylinder pressure supplied from the master cylinder 23 as is or for each wheel. For example, the brake actuator 27 is configured by an increase/decrease pressure control valve, and the like for increasing/decreasing each brake fluid pressure with respect to each of an oil reservoir, an oil pump, the first hydraulic piping 24, and the second hydraulic piping 26, and with respect to the hydraulic piping corresponding to each wheel. The operation of the brake actuator 27 is controlled by the control device 42 to be described later.

The hydraulic brake unit 28_{lf} applies the braking force on the left front tire 12, the hydraulic brake unit 28_{rf} applies the braking force on the right front tire 14, the hydraulic brake unit 28ₗᵣ applies the braking force on the left rear tire 16, and the hydraulic brake unit 28ᵣᵣ applies the braking force on the right rear tire 18. The hydraulic brake unit 28_{lf} includes a wheel cylinder 30_{lf}, which is supplied with the hydraulic pressure that is supplied from the master cylinder 23 and passed through the brake actuator 27 (adjusted by the brake actuator 27) by the second hydraulic piping 26, a brake rotor 32_{lf} that rotates with the wheel (left front tire 12), and a brake pad 34_{lf} that is supported by the vehicle body 11 so as not to rotate and which position is changed by the wheel cylinder 30_{lf} to make contact with the brake rotor 32_{lf} at the time of braking. The hydraulic brake unit 28_{lf} has a configuration described above, where when higher hydraulic pressure (hydraulic pressure at the time of braking) is supplied from the master cylinder 23 through the brake actuator 27, the wheel cylinder 30_{lf} moves in a direction of pushing the brake pad 34_{lf} against the brake rotor 32_{lf}. The brake pad 34_{lf} and the brake rotor 32_{lf} thus make contact, and the force in the direction of stopping the rotation is applied on the brake rotor 32_{lf}. The hydraulic brake unit 28_{lf} applies the braking force on the tire arranged facing thereto by the hydraulic pressure supplied from the master cylinder 23 through the brake actuator 27.

The hydraulic brake units 28_{rf}, 28ₗᵣ, 28ᵣᵣ merely differ in the arrangement position (tire arranged in correspondence), and basically have configurations similar to the hydraulic brake unit 28_{lf}. The hydraulic brake unit 28_{rf} has the position of a wheel cylinder 30_{rf} changed by the hydraulic pressure supplied from the first hydraulic piping 24 (i.e., hydraulic pressure supplied from the master cylinder 23 through the brake actuator 27 by the first hydraulic piping 24), where high hydraulic pressure is supplied to the wheel cylinder 30_{rf} from the first hydraulic piping 24 and a brake pad 34_{rf} and a brake rotor 32_{rf} are brought into contact to apply the braking force on the right front tire 14 at the time of braking. The hydraulic brake unit 28ₗᵣ has the position of a wheel cylinder 30ₗᵣ changed by the hydraulic pressure supplied from the first hydraulic piping 24, where high hydraulic pressure is supplied to the wheel cylinder 30ₗᵣ from the first hydraulic piping 24 and a brake pad 34ₗᵣ and a brake rotor 32ₗᵣ are brought into contact to apply the braking force on the left rear tire 16 at the time of braking. The hydraulic brake unit 28ᵣᵣ has the position of a wheel cylinder 30ᵣᵣ changed by the hydraulic pressure supplied from the second hydraulic piping 26, where high hydraulic pressure is supplied to the wheel cylinder 30ᵣᵣ from the second hydraulic piping 26 and a brake pad 34ᵣᵣ and a brake rotor 32ᵣᵣ are brought into contact to apply the braking force on the right rear tire 18 at the time of braking.

The braking device 20 is configured as above, and the hydraulic pressure is discharged from the master cylinder 23 to the first hydraulic piping 24 and the second hydraulic piping 26 when the passenger depresses the brake pedal 21. The hydraulic pressure discharged from a first fluid pressure chamber of the master cylinder 23 is supplied to the hydraulic brake unit 28_{rf} and the hydraulic brake unit 28_{lf} through the first hydraulic piping 24. The hydraulic pressure discharged from a second fluid pressure chamber of the master cylinder 23 is supplied to the hydraulic brake unit 28_{lf} and the hydraulic brake unit 28ᵣᵣ through the second hydraulic piping 26. When the hydraulic pressure is discharged from the master cylinder 23 to each hydraulic brake unit, the brake pad makes contact with the brake rotor of each hydraulic brake unit thus applying the braking force on the tire. The vehicle 10 is then decelerated and comes to a stop.

The hydraulic pressure sensor 40 is a hydraulic pressure detecting element for detecting the hydraulic pressure of the master cylinder 23. The hydraulic pressure sensor 40 detects the hydraulic pressure of the working oil supplied from the master cylinder 23 to the first hydraulic piping 24 and/or the second hydraulic piping 26, and transmits the detection result to the control device 42.

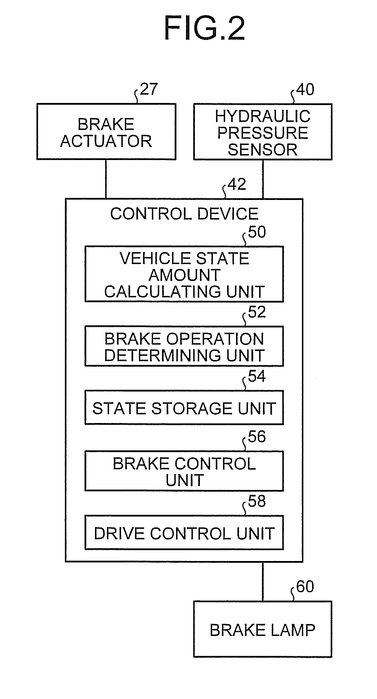

The control device 42 then controls the operation of each unit of the vehicle 10 based on the detection result of the sensor provided from each unit, the input operation, the set conditions, and the like. FIG. 2 is a block diagram illustrating a schematic configuration of the control device. As illustrated in FIG. 2, the control device 42 includes a vehicle state amount calculating unit 50, a brake operation determining unit 52, a state storage unit 54, a brake control unit 56, and a drive control unit 58. The control device 42 is not limited to such units and has various functions used as an ECU (Electronic Control Unit) of the vehicle 10.

The control device 42 is coupled to the brake actuator 27, the hydraulic pressure sensor 40, and a brake lamp 60. The brake lamp 60 is a light emitting element arranged at the back side of the vehicle body 11. The brake lamp 60 is lighted and non-lighted to have the following vehicle recognize whether the braking operation is being executed. The control device 42 is also coupled to various control targets and detection elements other than the brake actuator 27, the hydraulic pressure sensor 40, and the brake lamp 60. Each unit of the control device 42 will be described below.

The vehicle state amount calculating unit 50 detects and calculates the state of the vehicle 10 based on the information provided from each unit of the control device 42. The vehicle state amount includes detected information from various types of sensors such as a wheel speed sensor, an acceleration sensor, and the like, control information in the various control devices, control information of various types of actuators, and the like, and furthermore, travelling speed, engine rotation number, transmitting condition, braking operation, rotation angle, and the like.

The brake operation determining unit 52 determines whether a state in which the braking operation is input or a state in which the braking operation is not input. The brake operation determining unit 52 determines whether the state in which the braking operation is input (state in which the brake operation is being executed) or the state in which the braking operation is not input (state in which the brake operation is not being executed) based on the detection result detected by the hydraulic pressure sensor 40. The determination processing by the brake operation determining unit 52 will be described later.

When determined by the brake operation determining unit 52 that the braking operation is input, the state storage unit 54 stores the vehicle state amount at the time point the input of the braking operation started. The state storage unit 54 repeats the temporary storing and updating of the vehicle state amount calculated by the vehicle state amount calculating unit 50 until determined by the brake operation determining unit 52 that the braking operation is input, and stores the vehicle state amount corresponding to the time point of the input of the braking operation started as the relevant vehicle state from the temporarily stored vehicle state amount when determined by the brake operation determining unit 52 that the braking operation is input.

The brake control unit 56 controls the operation of the brake actuator 27 based on the vehicle state amount calculated by the vehicle state amount calculating unit 50, the determination result of the brake operation determining unit 52, and the operation input by the operator. The brake control unit 56 switches a stop switch signal ON and OFF based on the determination result of the brake operation determining unit 52 to determine the lighting of the brake lamp 60 and the control reference state of various types of braking operations. The stop switch signal is turned ON in a state the braking control is being executed (state in which the braking force is acted) and is turned OFF in a state the braking control is not being executed (state in which the braking force is not acted).

The drive control unit 58 controls the operation of the drive units, for example, the engine, the transmitting element, the steering element, and the like based on the vehicle state amount calculated by the vehicle state amount calculating unit 50 and the operation input by the operator.

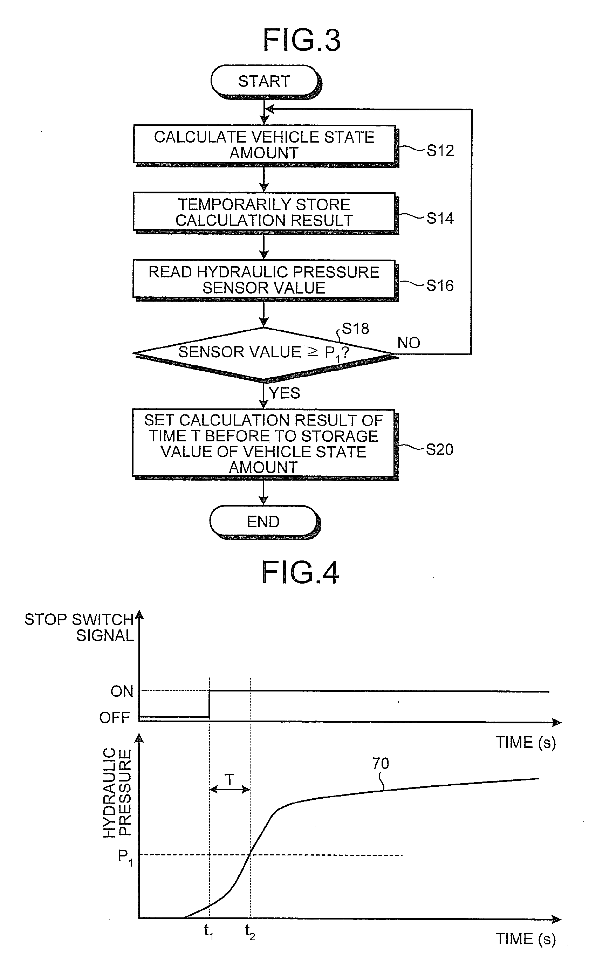

The control operation of the control device 42 will now be described in more detail using FIG. 3 and FIG. 4. FIG. 3 is a flowchart illustrating one example of the operation of the control device, and FIG. 4 is a graph illustrating one example of a relationship with the stop switch signal of the hydraulic pressure. The processing illustrated in FIG. 3 can be executed by having the control device 42 perform processing on each unit, mainly the brake operation determining unit 52, based on the information provided from the sensor and the like outside the device. The processing illustrated in FIG. 3 is the processing started in the state in which the braking operation is not input, that is, the processing performed in the state the stop switch signal is turned OFF.

First, the control device 42 performs the calculation of the vehicle state amount with the vehicle state amount calculating unit 50 in step S12, and temporarily stores the calculation result (vehicle state amount) calculated in step S12 in the state storage unit 54 in step S14. In the present embodiment, the calculation result is temporarily stored in the state storage unit 54, but may be temporarily stored in the vehicle state amount calculating unit 50.

After temporarily storing the calculation result in step S14, the control device 42 reads the hydraulic pressure sensor value in step S16. That is, the hydraulic pressure value of the master cylinder 23 detected by the hydraulic pressure sensor 40 is read.

Thereafter, the control device 42 determines whether or not the sensor value is greater than or equal to P₁, which is a threshold value (sensor value ≥ P₁) with the brake operation determining unit 52 in step S18. The threshold value P₁ is a value set in advance, and is a reference value for determining whether or not the brake operation is being executed, that is, whether or not the braking operation is input. The control device 42 determines that the braking operation is not input if the sensor value is not greater than or equal to P₁ (No), that is, the sensor value < P₁ in step S18, and proceeds the processing to step S12. The control device 42 repeats the above processing until the sensor value becomes greater than or equal to P₁.

The control device 42 determines that the braking operation is input, that is, the brake operation is input if the sensor value is greater than or equal to P₁ (Yes), that is, the sensor value ≥ P₁ in step S18, and sets the calculation result before time T as the storage value of the vehicle state amount in step S20. The time T is a time set in advance. The control device 42 sets the vehicle state amount calculated before time T from the time of calculation of the vehicle state amount corresponding to the sensor value that served as the criterion in step S18 among the calculation results (vehicle state amount) temporarily stored in step S14 as the storage value of the vehicle state amount in step S20. The storage value of the vehicle state amount is the vehicle state amount at the time of start of input of the braking operation set when determined that the braking operation is input. The control device 42 assumes the time point the storage value of the vehicle state amount is set as the time point the stop switch signal is turned ON. The control device 42 assumes the stop switch signal is turned ON going back time T with respect to the time point at which the sensor value becomes greater than or equal to P₁. The control unit 42 terminates the processing after performing the processing of step S20.

For example, when the driver depresses the brake pedal 21 to gradually raise the hydraulic pressure of the master cylinder 23 as shown with a solid line 70 in FIG. 4, the control device 42 executes the processing of FIG. 3 and determines that the sensor value is greater than or equal to the hydraulic pressure P₁ at the time point of time t₂. Thereafter, the control device 42 stores the vehicle state amount of time t₁ as an input starting time point of the brake operation with t₁ before time T fromtime t₂ as the input starting time point of the brake operation. Assume the stop switch signal is output at t₁, which is the input starting time point of the braking operation. The control device 42 then stores the vehicle state amount at the time point the stop switch signal is output as the vehicle state amount at the start of input of the braking operation. When determining that the sensor value is greater than or equal to P₁, the control device 42 lights the brake lamp 60 at the determined time point.

Therefore, the control device 42 determines whether the brake operation is input or not input using the threshold value P₁ and the detected sensor value, and assumes the time point, which is a set time T before the determined time point, as the input starting time point of the braking operation (time point at which the brake operation is executed) when determining that the brake operation is input to more accurately execute the braking control.

That is, at the time point the hydraulic pressure exceeds the threshold value P₁, a state in which the braking force is already applied on the vehicle 10 is obtained. Thus, the state in which the braking force is acting is assumed as a reference if the vehicle state amount at the detection time point is assumed as a reference, and hence the braking control may not be executed with the accurate travelling state as a criterion. For example, if the braking force is acted in a state the friction resistance with the road surface of the left and right wheels is different, one wheel may be in a slipped state and the rotation speed of the left and right wheels may take different values. The vehicle state amount in this case is determined as bent since the rotation speed of the wheels is different even when travelling in a straight line. Therefore, the travelling state different from the actual travelling state may be recognized if the state in which the braking force is acting is set as the vehicle state amount to become the reference of control. On the contrary, the control device 42 can set the vehicle state amount in a state the braking force is not acting, or in a state the braking force can be ignored as the vehicle state amount at the time of start of the braking operation. The control with respect to the braking operation thus can be more accurately executed.

With the time point of the set time T before the time point at which determination is made that the braking operation is input as the input starting time point of the brake operation, the input of the braking operation can be reliably detected and the detection similar to when detected by the brake pedal 21 can be carried out. That is, the fluctuation of the hydraulic pressure detected by the master cylinder 23 causes delay with respect to the depressing operation of the brake pedal 21. Thus, a certain delay occurs with respect to the time point at which the depressing of the brake by the driver is recognized at the time of detection of the hydraulic pressure of the threshold value, but the time point similar to the time of depressing of the brake pedal 21 can be assumed as the start of input of the braking operation by having the set time T before as the start of the braking operation.

With the threshold value as P₁ and assuming the time point of set time T before the time point at which determination is made that the braking operation is input, the pressure at which determination can be reliably made that the braking operation is input can be used for the threshold value P₁. That is, the time point at which the input of the braking operation started can be accurately set while using a value having a pressure difference of a certain extent with the pressure of the non-input state for the threshold value P₁. Even if the hydraulic pressure changes by the usage environment and the usage state, and the hydraulic pressure is increased/decreased, determination that the braking operation is input is made according to such increase/decrease, that is, false detection can be thus suppressed from being made.

The brake lamp 60 is lighted at the time point determination is made that the braking operation is input, so that notification can be made to the following vehicle that the braking operation is being executed.

The control device 42 of the present embodiment assumes the time point of the set time T before the time point at which determination is made that the braking operation is input as the input starting time point of the brake operation since the control on the braking operation can be more accurately executed, but this is not the sole case. The braking device 20 and the control device 42 may merely determine whether the braking operation is input based on the hydraulic pressure of the master cylinder 23 detected by the hydraulic pressure sensor 40. That is, the control on the braking operation may be started from the time point determination is made that the braking operation is input based on the hydraulic pressure of the master cylinder 23 detected by the hydraulic pressure sensor 40. The presence/absence of input of the braking operation can be detected without detecting the depressing amount of the brake pedal 21 by detecting the input of the braking operation based on the hydraulic pressure of the master cylinder 23 detected by the hydraulic pressure sensor 40. The presence/absence of input of the braking operation can be detected and the device configuration can be simplified by merely using the hydraulic pressure sensor 40 to be used for another purpose without arranging a sensor for detecting the depressing amount of the brake pedal 21. The hydraulic pressure generated by the depressing of the brake pedal can be detected by detecting the hydraulic pressure of the master cylinder 23, and the brake lamp can be lighted according to the input of the braking operation without using the sensor for detecting the depressing amount of the brake pedal 21. The control of lighting of the brake lamp corresponding to the input of the braking operation thus can be carried out with a simple configuration.

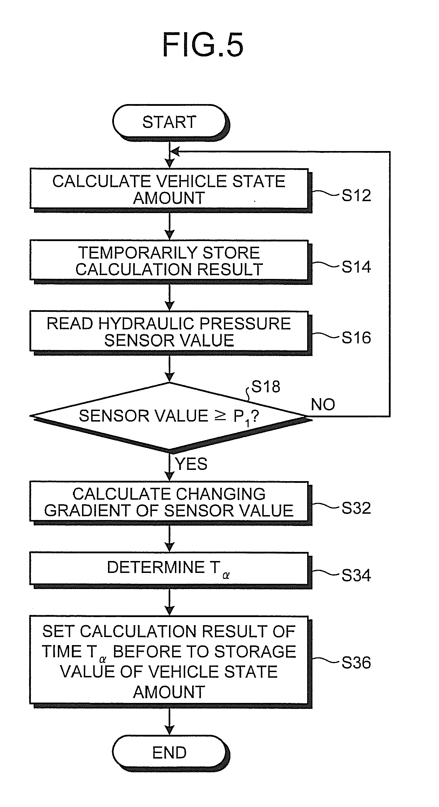

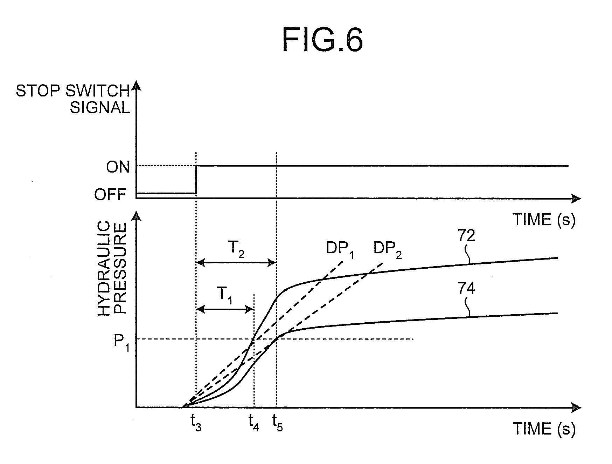

Another example of the control operation by the control device 42 will now be described using FIG. 5 and FIG. 6. FIG. 5 is a flowchart illustrating one example of the operation of the control device, and FIG. 6 is a graph illustrating one example of a relationship with a stop switch signal of the hydraulic pressure. In the control operation illustrated in FIG. 5 and FIG. 6, the processing is basically similar to the processing of FIG. 3 and FIG. 4 other than the method of setting a set time T_{α}.

First, the control device 42 performs the processing similar to FIG. 3 described above for the processing from step S12 to step S18. The control device 42 determines whether the sensor value is greater than or equal to P₁ (sensor value ≥ P₁), which is the threshold value, with the brake operation determining unit 52 in step S18. The control device 42 determines that the braking operation is not input if the sensor value is not greater than or equal to P₁ (No), that is, the sensor value < P₁ in step S18, and proceeds to step S12. The control device 42 repeats the processing from step S12 to step S18 until the sensor value becomes greater than or equal to P₁.

The control device 42 determines that the braking operation is input, that is, the brake operation is input if the sensor value is greater than or equal to P₁ (Yes), that is, the sensor value ≥ P₁ in step S18, and calculates a changing gradient of the sensor value in step S32. The changing gradient of the sensor value is the speed in the changing of the detected value of the hydraulic pressure, and is the slope of the calculated value of the hydraulic pressure. In the present embodiment, the changing gradient is calculated based on a relationship between the detected value at the most recent time point at which a predetermined value (value smaller than the threshold value P₁) is reached and the detected value detected in step S18. The method of calculating the changing gradient is not limited thereto. For example, the changing gradient is calculated based on a relationship between the detected value detected in step S18 and the detected value a predetermined time before.

After calculating the changing gradient in step S32, the control device 42 determines time T_{α} in step S34. The time T_{α} is determined based on the changing gradient calculated in step S32. The control device 42 is set in advance with the relationship of the changing gradient and the time T_{α}, and thus determines the time T_{α} using the changing gradient calculated in step S32 and the relevant relationship. The relationship between the changing gradient and the time T_{α} is such that the time T_{α} becomes shorter the greater the changing gradient, that is, the greater the change in hydraulic pressure per unit time, and the time T_{α} is longer the smaller the changing gradient, that is, the smaller the change in hydraulic pressure per unit time.

After determining the time T_{α} in step S34, the control device 42 sets the calculation result of time T_{α} before for a storage value of the vehicle state amount in step S36. That is, in step S36, the control device 42 assumes the vehicle state amount calculated time T_{α} before from the calculation of the vehicle state amount corresponding to the sensor value serving as the criterion in step S18 among the calculation results (vehicle state amounts) temporarily stored in step S14 as the storage value of the vehicle state amount. The control device 42 assumes the time point at which the storage value of the vehicle state amount is set as the time point at which the stop switch signal is turned ON. Thus, the control device 42 assumes that the stop switch signal is turned ON going back time T_{α} with respect to the time point at which the sensor value becomes greater than or equal to P₁. After performing the processing of step S36, the control device 42 terminates the processing.

For example, when the driver depresses the brake pedal and the hydraulic pressure of the master cylinder rises as indicated with a solid line 72 in FIG. 6, the control device 42 executes the processing of FIG. 5 and determines that the sensor value is greater than or equal to P₁ at the time point of time t₄. The control device 42 then calculates the changing gradient DP₁ based on the detected value at time t₄ and the time point at which the hydraulic pressure becomes a predetermined value (point at which the value of the hydraulic pressure becomes an origin in FIG. 6). Thereafter, the control device 42 determines T₁ as the time T_{α} from the changing gradient DP₁. The control device 42 then stores the vehicle state amount at time t₃ as the input starting time point of the brake operation assuming t₃ before time T₁ from time t₄ is the input starting time point of the brake operation. The stop switch signal is assumed to be output at time t₃, which is the input starting time point of the braking operation. The control device 42 then stores the vehicle state amount at the time point the stop switch signal is output as the vehicle state amount at the start of input of the braking operation. The control device 42 lights the brake lamp 60 at the determined time point when determining that the sensor value is greater than or equal to P₁.

when the driver depresses the brake pedal and the hydraulic pressure of the master cylinder rises as indicated with a solid line 74 in FIG. 6, the control device 42 executes the processing of FIG. 5 and determines that the sensor value is greater than or equal to P₁ at the time point of time t₅. The control device 42 then calculates the changing gradient DP₂ based on the detected value at time t₅ and the time point at which the hydraulic pressure becomes a predetermined value (point at which the value of the hydraulic pressure becomes an origin in FIG. 6). Thereafter, the control device 42 determines T₂ as the time T_{α} from the changing gradient DP₂. The control device 42 then stores the vehicle state amount at time t₃ as the input starting time point of the brake operation assuming t₃ before time T₂ from time t₅ is the input starting time point of the brake operation. The stop switch signal is assumed to be output at time t₃, which is the input starting time point of the braking operation. The control device 42 then stores the vehicle state amount at the time point the stop switch signal is output as the vehicle state amount at the start of input of the braking operation. The control device 42 lights the brake lamp 60 at the determined time point when determining that the sensor value is greater than or equal to P₁.

Therefore, the control device 42 assumes the vehicle state amount that becomes a reference even when the input of the braking operation, that is, the depressing operation of the brake is changed as the similar vehicle state amount by determining the time T_{α} to go back based on the changing gradient of the detected value of the hydraulic pressure. That is, the time to go back becomes longer when the changing gradient is small and the time to go back becomes shorter when the changing gradient is large by determining the time T_{α} to go back based on the changing gradient of the detected value of the hydraulic pressure, so that the input starting time point of the braking operation can be calculated at higher accuracy. That is, as shown with the solid lines 72, 74 of FIG. 6, the vicinity of the input starting time point of the braking operation can be similarly detected as the start of input of the braking operation even if the reaching time to the hydraulic pressure P₁ from the start of input (depression of brake) of the braking operation differs. The braking control thus can be more accurately executed.

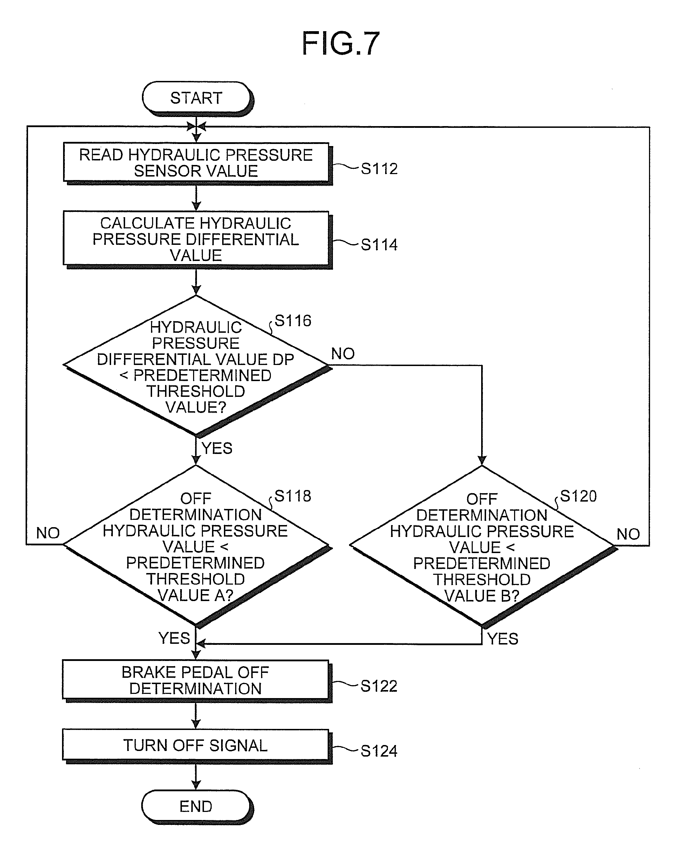

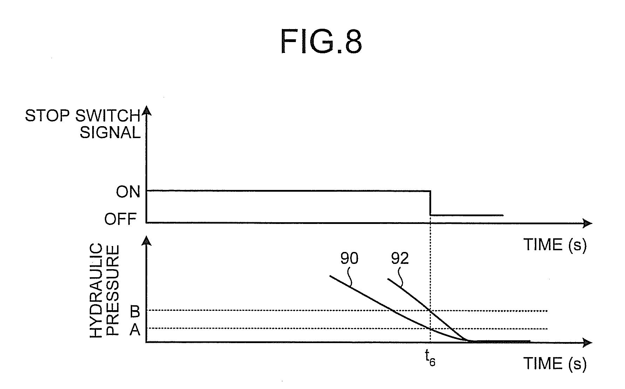

Another example of the control operation by the control device 42 will now be described using FIG. 7 and FIG. 8. FIG. 7 is a flowchart illustrating one example of the operation of the control device, and FIG. 8 is a graph illustrating one example of a relationship with the stop switch signal of the hydraulic pressure. The control operation illustrated in FIG. 7 and FIG. 8 is an example of the control operation until determining as a state in which determination is not made that the braking operation is input from the state in which determination is made that the braking operation is input. That is, it is the control operation of switching from ON to OFF the stop switch signal indicating that the braking operation is being carried out.

First, the control device 42 reads the hydraulic pressure sensor value in step S112. That is, the hydraulic pressure value of the master cylinder 23 detected by the hydraulic pressure sensor 40 is read. Thereafter, the control device 42 calculates a differential value (changing speed) of the read hydraulic pressure value in step S114. That is, the differential value of the hydraulic pressure is calculated using the sensor value of the hydraulic pressure read in step S112 and the sensor value of the hydraulic pressure read before that. The differential value of the hydraulic pressure may use the value read immediately before or may use the value read before that for the sensor value of the hydraulic pressure read before.

After calculating the hydraulic pressure differential value in step S114, the control device 42 determines whether or not the hydraulic pressure differential value DP < predetermined threshold value in step S116. The predetermined threshold value is a value set in advance (hydraulic pressure differential value).

The control device 42 determines that OFF determination hydraulic pressure value < predetermined threshold value A when determining that hydraulic pressure differential value DP < predetermined threshold value (Yes), that is, the hydraulic pressure differential value is smaller than the predetermined threshold value in step S116. The OFF determination hydraulic pressure value is the hydraulic pressure sensor value detected in step S112. The predetermined threshold value A is the value set in advance (hydraulic pressure value), and is a termination threshold value that serves as a criterion for determining the termination of the braking control. The control device 42 determines that the braking operation is input when determining that the OFF determination hydraulic pressure value ≥ predetermined threshold value A (No), that is, the OFF determination hydraulic pressure value is greater than or equal to the predetermined threshold value A in step S118, and proceeds to step S112 to repeat the above processing. The control device 42 proceeds to step S122 when determining that the OFF determination hydraulic pressure value < predetermined threshold value A (Yes), that is, the OFF determination hydraulic pressure value is smaller than the predetermined threshold value A in step S118.

The control device 42 determines whether OFF determination hydraulic pressure value < predetermined threshold value B in step S120 when determining that the hydraulic pressure differential value DP ≥ predetermined threshold value (No), that is, the hydraulic pressure differential value is greater than or equal to the predetermined threshold value in step S116. The predetermined threshold value B is a value set in advance (hydraulic pressure value), and is a termination threshold value. The predetermined threshold value B is a value higher than the predetermined threshold value A. The control device 42 determines that the braking operation is input and proceeds to step S112 to repeat the above processing when determining that the OFF determination hydraulic pressure value ≥ predetermined threshold value B (No), that is, the OFF determination hydraulic pressure value is greater than or equal to the predetermined threshold value B in step S120. The control device 42 proceeds to step S122 when determining that the OFF determination hydraulic pressure value < predetermined threshold value B (Yes), that is, the OFF determination hydraulic pressure value is smaller than the predetermined threshold value B in step S120.

The control device 42 determines that the brake pedal 21 is turned OFF in step S122 when determining Yes in step S118 or step S120. That is, the control device 42 determines that the input of the braking operation is terminated (braking operation is not input). Thereafter, the control device 42 turns OFF the signal, that is, turns OFF the stop switch signal in step S124, and terminates the present processing. The control device 42 terminates the braking control and turns OFF the brake lamp 60 after turning OFF the stop switch signal.

For example, when the driver releases the depressing of the brake pedal, that is, gradually moves the foot away from the brake pedal 21 to gradually lower the hydraulic pressure of the master cylinder 23 as shown with a solid line 90 in FIG. 8, the control device 42 executes the processing of FIG. 7 and performs the following processing. First, the control device 42 calculates the hydraulic pressure differential value. The solid line 90 shows gradual change in the hydraulic pressure. Thus, the control device 42 determines that the hydraulic pressure differential value is smaller than the predetermined threshold value and sets the predetermined hydraulic pressure value A for the threshold value of the hydraulic pressure value. Thereafter, the control device 42 repeats the determination of the hydraulic pressure differential value until the hydraulic pressure value becomes smaller than the threshold value A. In the solid line 90, the threshold value A is calculated as the threshold value since the changing rate of the hydraulic pressure is substantially constant. The control device 42 then determines that the hydraulic pressure value detected at time t₆ is smaller than the threshold value A and turns OFF the stop switch signal. The control device 42 turns OFF the stop switch signal, terminates the braking control, and turns OFF the brake lamp 60.

On the other hand, when the driver releases the depressing of the brake pedal 21 in a short period of time to rapidly lower the hydraulic pressure of the master cylinder 23 than the solid line 90 as shown with a solid line 92 in FIG. 8, the control device 42 also executes the processing of FIG. 7 and performs the following processing. First, the control device 42 calculates the hydraulic pressure differential value. The solid line 92 shows rapid change of a certain extent in the hydraulic pressure. Thus, the control device 42 determines that the hydraulic pressure differential value is greater than the predetermined threshold value and sets the predetermined hydraulic pressure value B for the threshold value of the hydraulic pressure value. Thereafter, the control device 42 repeats the determination of the hydraulic pressure differential value until the hydraulic pressure value becomes smaller than the threshold value B. In the solid line 92, the threshold value B is calculated as the threshold value since the changing rate of the hydraulic pressure is substantially constant. The control device 42 then determines that the hydraulic pressure value detected at time t₆ is smaller than the threshold value B and turns OFF the stop switch signal. The control device 42 turns OFF the stop switch signal, terminates the braking control, and turns OFF the brake lamp 60.

Therefore, the control device 42 can detect the termination of the braking operation at the timing corresponding to the movement of the brake pedal by determining the threshold value of the hydraulic pressure value that acts as a criterion for determining the termination of the braking operation based on the differential value of the hydraulic pressure. The termination of the braking operation thus can be detected at the timing similar to when the termination of the braking operation is detected based on the position of the brake pedal.

As described above, the hydraulic pressure of the master cylinder 23 is the pressure fluctuation of the liquid, and hence a constant buffer action occurs and the hydraulic pressure changes with delay with respect to the release of the depressing of the brake pedal 21. Such delay changes by the releasing operation of the depressing of the brake pedal. That is, the delay in conversion of the hydraulic pressure with respect to the release of the depressing of the brake pedal 21 differs between when the brake pedal 21 is quickly released and when the brake pedal 21 is slowly released. Thus, assuming the same hydraulic pressure as the reference, shift occurs with respect to the actual releasing operation of the depressing of the brake pedal 21. The control device 42 can take into consideration the delay that occurs by the releasing operation of the depressing of the brake pedal 21 by setting a threshold value on the basis of a differential value of the hydraulic pressure. Thus, the stop switch signal can be output in correspondence with the position of the brake pedal 21 even if the releasing operation of the depressing is different, as illustrated in FIG. 8. That is, an appropriate threshold value can be set for when the brake pedal is quickly released and when the brake pedal 21 is slowly released, respectively, so that control similar to when the position of the brake pedal 21 is detected by the sensor can be enabled.

The control device 42 may provide a constant time interval from when determination is made that the sensor value of the hydraulic pressure is smaller than the threshold value until the stop switch signal is turned OFF. The ON and OFF of the braking operation is determined at a value the hydraulic pressure can be reliably detected, and the stop step signal can be turned OFF at the time point it is actually turned OFF.

In the embodiment described above, the threshold value A and the threshold value B are fixed values set in advance, but may be calculated based on the detected hydraulic pressure differential value. In the embodiment described above, the threshold value A and the threshold value B are set with the threshold value of one hydraulic pressure differential value as a reference, but this is not the sole case, and the threshold value of a plurality of hydraulic pressure differential values may be set and the threshold value of the hydraulic pressure value may be set with respect to the threshold value of each hydraulic pressure differential value.

The control device 42 may execute only one of the processing illustrated in FIG. 3, FIG. 5, and FIG. 7, or may execute a plurality of processing. The processing illustrated in FIG. 3 and FIG. 5 is the control for turning the stop switch signal from ON to OFF, and the processing illustrated in FIG. 7 is the control for turning the stop switch signal from OFF to ON, and thus the ON/OFF of the stop switch signal, that is, the braking control can be smoothly executed by executing both processing.

In the present embodiment, the hydraulic pressure is controlled since the working oil is used for the liquid for operating the braking device, but similar control can be executed at the fluid pressure if other liquids are used.

The vehicle braking device and the control device of the present embodiment are necessary in the vehicle, and the processing described above can be carried out normally using the detected value of the hydraulic pressure sensor arranged for other applications. The device configuration can be simplified since the sensor for detecting the depressing amount of the brake pedal is not necessary, and processing similar to when using the sensor for detecting the depressing amount of the brake pedal 21 can be carried out. The vehicle braking device and the control device of the present embodiment are used as backup devices for when the sensor for detecting the depressing amount of the brake pedal 21 breaks down even when used in the vehicle including the sensor for detecting the depressing amount of the brake pedal 21. Thus, even if used as the backup device, the processing similar to when the sensor for detecting the depressing amount of the brake pedal 21 is used can be carried out and the braking control can be appropriately executed.

### Industrial Applicability

Therefore, the vehicle braking device and the control device according to the present invention are useful in being used for the control based on the braking operation of the travelling vehicle body.

### Reference Signs List

- 10: vehicle
- 11: vehicle body
- 20: braking device
- 23: master cylinder
- 24: first hydraulic piping
- 26: second hydraulic piping
- 27: brake actuator
- 28_{lf}: hydraulic brake unit
- 28_{rf}: hydraulic brake unit
- 28ₗᵣ: hydraulic brake unit
- 28ᵣᵣ: hydraulic brake unit
- 40: hydraulic pressure sensor
- 42: control device

## Claims

1. A vehicle braking device for applying a braking force on tires arranged on a vehicle body rotatably, the vehicle braking device comprising:
a fluid pressure braking unit configured to act the braking force on the tires;
a master cylinder configured to supply fluid pressure to the fluid pressure braking unit;
a pressure detection sensor configured to detect pressure of the fluid pressure supplied from the master cylinder to the fluid pressure braking unit; and
a control device including a storage unit configured to store detected driving conditions, a braking operation determining unit configured to determine state of the braking operation based on the fluid pressure detected by the pressure detection sensor, and a control unit configured to control operation based on the determination result of the braking operation determining unit, wherein
the braking operation determining unit determines that the braking operation is input when the fluid pressure detected by the pressure detection sensor is greater than or equal to a threshold value set in advance, and
the control unit switches a brake lamp arranged on the vehicle body from a non-lighted state to a lighted state as a control corresponding to the input of the braking operation, when the braking operation determining unit determines that the braking operation is input.

2. The vehicle braking device according to claim 1, wherein
the control unit stores a drive state of set time before a time point at which determination is made that the fluid pressure detected by the pressure detection sensor is greater than or equal to the threshold value, in the storage unit as a drive state at start of the input of the braking operation, as a control corresponding to the input of the braking operation, when the braking operation determining unit determines that the braking operation is input.

3. The vehicle braking device according to claim 2, wherein
the control unit sets the set time based on a changing speed of the fluid pressure.

4. The vehicle braking device according to claim 3, wherein
the control unit makes the set time shorter the greater the changing speed of the fluid pressure, and makes the set time longer the smaller the changing speed of the fluid pressure.

5. The vehicle braking device according to any one of claims 1 to 4, wherein
the braking operation determining unit determines that the braking operation is terminated when the fluid pressure detected by the pressure detection sensor is smaller than a termination threshold value set in advance, in a state where the determination being made that the braking operation is input, and
the control unit terminates the control corresponding to the input of the braking operation, when the braking operation determining unit determines that the braking operation is terminated.

6. A vehicle braking device for applying a braking force on tires arranged on a vehicle body rotatably, the vehicle braking device comprising:
a fluid pressure braking unit configured to act the braking force on the tires;
a master cylinder configured to supply fluid pressure to the fluid pressure braking unit;
a pressure detection sensor configured to detect pressure of the fluid pressure supplied from the master cylinder to the fluid pressure braking unit; and
a control device including a storage unit configured to store detected driving conditions, a braking operation determining unit configured to determine state of the braking operation based on the fluid pressure detected by the pressure detection sensor, and a control unit configured to control operation based on the determination result of the braking operation determining unit, wherein
the braking operation determining unit determining that the braking operation is terminated when determined that the fluid pressure detected by the pressure detection sensor is smaller than a termination threshold value set in advance, in a state where the determination being made that the braking operation is input, and
the control unit terminates the control corresponding to the input of the braking operation when the braking operation determining unit determines that the braking operation is terminated.

7. The vehicle braking device according to claim 5 or 6, wherein
the braking operation determining unit sets the termination threshold value based on the changing speed of the fluid pressure.

8. The vehicle braking device according to any one of claims 5 to 7, wherein
the braking operation determining unit sets the termination threshold value higher the greater the changing speed of the fluid pressure, and sets the termination threshold value lower the smaller the changing speed of the fluid pressure.

9. The vehicle braking device according to any one of claims 5 to 8, wherein
the control unit switches the brake lamp from a lighted state to a non-lighted state as a control for terminating the braking control.

10. A control device of a vehicle, including a fluid pressure braking unit configured to act a braking force on the tires, a master cylinder configured to supply fluid pressure to the fluid pressure braking unit, and a pressure detection sensor configured to detect the pressure of the fluid pressure supplied from the master cylinder to the fluid pressure braking unit, the control device applying a braking force on the tires arranged on the vehicle body rotatably, the control device comprising:
a storage unit configured to store driving condition detected by a sensor arranged on the vehicle body;
a braking operation determining unit configured to determine a state of the braking operation based on the fluid pressure detected by the pressure detection sensor; and
a control unit configured to control operation based on the determination result of the braking operation determining unit, wherein
the braking operation determining unit determines that the braking operation is input when determining that the fluid pressure detected by the pressure detection sensor exceeds a threshold value set in advance, and
the control unit switches a brake lamp arranged on the vehicle body from a non-lighted state to a lighted state as a control corresponding to the input of the braking operation, when the braking operation determining unit determines that the braking operation is input.

11. The control device according to claim 10, wherein
the control unit assumes a drive state of set time before from a time point at which determination is made that the fluid pressure detected by the pressure detection sensor exceeds a threshold value set in advance as a drive state at start of input of the braking operation, as a control corresponding to the input of the braking operation, when the braking operation determining unit determines that the braking operation is input.

12. A control device of a vehicle, including a fluid pressure braking unit configured to act a braking force on the tires, a master cylinder configured to supply fluid pressure to the fluid pressure braking unit, and a pressure detection sensor configured to detect the pressure of the fluid pressure supplied from the master cylinder to the fluid pressure braking unit, the control device applying a braking force on the tires arranged on the vehicle body rotatably, the control device comprising:
a storage unit configured to store driving condition detected by a sensor arranged on the vehicle body;
a braking operation determining unit configured to determine a state of the braking operation based on the fluid pressure detected by the pressure detection sensor; and
a control unit configured to control operation based on the determination result of the braking operation determining unit, wherein
the braking operation determining unit determines that the braking operation is terminated when determining that the fluid pressure detected by the pressure detection sensor is smaller than a termination threshold value set in advance, in a state where the determination being made that the brake operation is input, and
the control unit terminates the control corresponding to the input of the braking operation when the braking operation determining unit determines that the braking operation is terminated.
